(19) Europäisches Patentamt / European Patent Office / Office européen des brevets

(11) **EP 3 290 477 B1**

(12) **FASCICULE DE BREVET EUROPEEN**

(45) Date de publication et mention de la délivrance du brevet:
**08.01.2020 Bulletin 2020/02**

(51) Int Cl.:
***C08L 67/02*** *(2006.01)* ***B65D 81/00*** *(2006.01)*
***B65D 85/50*** *(2006.01)*

(21) Numéro de dépôt: **17183330.4**

(22) Date de dépôt: **26.07.2017**

(54) **COMPOSITION PLASTIQUE RECYCLABLE, BIODÉGRADABLE ET/OU COMPOSTABLE APTE AU CONTACT ALIMENTAIRE, ARTICLES RIGIDES EN DÉRIVANT, PROCÉDÉS ET UTILISATIONS CORRESPONDANT**

RECYCELFÄHIGE, BIOLOGISCH ABBAUBARE UND/ODER KOMPOSTIERBARE KUNSTSTOFFZUSAMMENSETZUNG, DIE FÜR DEN KONTAKT MIT LEBENSMITTELN GEEIGNET IST, STARRE ARTIKEL AUS DIESEM MATERIAL, ENTSPRECHENDE VERFAHREN UND EINSATZBEREICHE

RECYCLABLE, BIODEGRADABLE AND/OR COMPOSTABLE FOOD-GRADE PLASTIC COMPOSITION, RIGID ITEMS DERIVED FROM SAME, AND CORRESPONDING METHODS AND USES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2016 FR 1658010**

(43) Date de publication de la demande:
**07.03.2018 Bulletin 2018/10**

(73) Titulaire: **ICCI SEA**
**56100 Lorient (FR)**

(72) Inventeurs:
- **GODET, Raynald**
  **56530 QUEVEN (FR)**
- **CHAUVEL, Marie**
  **56260 LARMOR PLAGE (FR)**

(74) Mandataire: **Vidon Brevets & Stratégie**
**16B, rue de Jouanet**
**BP 90333**
**35703 Rennes Cedex 7 (FR)**

(56) Documents cités:
**CN-A- 101 508 829** **FR-A1- 3 014 885**
**US-A1- 2012 021 154**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### 1. Domaine de l'invention

Le domaine de l'invention est celui des articles destinés au stockage, au conditionnement, au transport et/ou à la distribution de produits de la mer, notamment les poissons, les céphalopodes, les crustacés, les coquillages et les algues.

Plus précisément, l'invention concerne une composition plastique recyclable, avec une biodégradabilité et/ou une compostabilité ajustables et apte au contact alimentaire, procédé de fabrication et utilisation correspondant. L'invention concerne également des articles rigides destinés au stockage ou au conditionnement de produits de la mer, obtenus notamment à partir de ladite composition plastique recyclable, biodégradable et/ou compostable, et procédé de fabrication et utilisation correspondant.

### 2. Art antérieur

La consommation de produits de la mer est dépendante de nombreuses contraintes liées à leur récolte ou pêche, stockage, distribution, transport et livraison. En effet, la distance est souvent grande entre le lieu de récolte ou de pêche et le lieu de vente à l'intermédiaire ou au consommateur final. En outre, les professionnels de la mer, les grossistes et les détaillants se doivent de maintenir strictement la chaine du froid, afin d'assurer la fourniture de produits de mer frais et consommables au consommateur final.

Afin de les assister dans leur tâche, les professionnels de la mer, les grossistes et les détaillants utilisent de manière pléthorique les caisses de criée, également appelée caisses à poissons. Ces caisses à poissons, de forme et de dimensions généralement standard, permettent de stocker aisément les produits de la mer, tout en optimisant leur stockage, en facilitant leur transport d'un lieu à un autre et leur échange d'une personne à une autre. Ces caisses à poissons sont empilables et peuvent optionnellement être gerbables afin d'être adapté au transport, au stockage et à la conservation des marchandises.

Les caisses à poissons sont généralement des caisses obtenues à partir de matières plastiques pétrosourcées, c'est-à-dire obtenues à partir de composés dérivés du pétrole. Les composés dérivés de pétrole sont par exemple les polyéthylènes (PE) ou les polypropylènes (PP) auxquels sont ajoutés des additifs modifiant leurs propriétés. Ces articles présentent une très bonne résistance aux chocs, ils sont adaptés à une utilisation en milieu marin et ils ont une longue durée de vie.

Cependant, ces articles ont l'inconvénient d'être obtenus à partir de matières non biodégradables, et sont donc potentiellement polluants. Lorsque ces articles sont abandonnés dans le milieu naturel, par exemple en milieu marin ou sur les côtes, ceux-ci vont polluer durablement le site, parfois pendant des centaines d'années. En outre, au gré de leur dégradation et de leur décomposition, ces articles pourront libérer dans l'environnement des composés chimiques polluants. Enfin, la fragmentation des articles en fragments et particules plastiques va contribuer à une pollution durable des océans, et à une fragilisation de la faune aquatique et océanique par ingestion de ces fragments et particules.

Afin de limiter la pollution, des filières de recyclages ont été mises en place pour assurer la collecte, le traitement et potentiellement la réutilisation des articles usagés. De telles filières sont généralement coûteuses à mettre en œuvre et ne permettent que le recyclage partiel des articles usagés. Dans les faits, seuls deux types de plastiques sont recyclés, à savoir les PET (utilisés notamment pour la fabrication de bouteilles transparentes ou colorées) et les PeHD (utilisés notamment pour la fabrication de bouteilles opaques). Les autres plastiques comme le PVC ou celui des sacs de supermarché ne sont pas recyclés, du fait du coût prohibitif. À la place, ils sont brûlés dans les incinérateurs pour produire de l'énergie (on parle de « revalorisation énergétique »). Cependant, le plastique n'est pas recyclable à l'infini, comme le verre : le recycler ne fait que retarder le moment où il finira brûlé.

Afin de limiter la durée de vie des articles aptes au contact alimentaire, notamment afin d'accélérer leur dégradation ou leur décomposition, tout en minimisant la quantité de composés chimiques polluants, des composés plastiques alternatifs ont été utilisés, éventuellement en combinaison avec des composés additionnels. Par exemple, il est connu des articles comprenant des composés plastiques choisis parmi l'acide polyglycolique, l'acide polylactique, le polyhydroxy alcanoate, le polybutylène succinate-co-adipate, le polybutylène succinate-co-lactate, le polybutylène adipate-co-téréphthalate, le poly-epsilon caprolate, le polydioxanone.

Bien que certains de ces articles soient effectivement adaptés à différents types d'emballages pour des produits alimentaires, notamment les fruits et les légumes, ils ne sont pas nécessairement adaptés à des applications d'emballages rigides notamment pour le stockage et le conditionnement de produits de la mer. En effet, les produits de la mer sont péchés ou récoltés dans un environnement « agressif », du fait de la forte salinité de l'eau de mer et de la forte exposition aux rayons ultraviolets. En outre, la distance entre le lieu de récolte ou de pêche et le lieu de vente, et les multiples intervenants, nécessitent de bonnes propriétés mécaniques et notamment une bonne résistance à la traction, une bonne résistance à la flexion et une bonne résistance aux chocs. Enfin, la nécessité d'une part de respecter la chaîne du froid,

les normes fixant les températures limites et les tolérances de dépassement de 0 °C à +2 °C pour le poisson frais, et la nécessité d'autre part de laver de manière hygiénique et efficace à l'eau chaude avant réutilisation d'un même article, à une température généralement comprise entre 50°C et 65°C, nécessitent une bonne résistance thermique dans une large gamme de températures.

Pour limiter l'impact environnemental, il est donc nécessaire de fournir des compositions plastiques, et des articles plastiques rigides obtenus à partir de celles-ci, qui soient recyclables, biodégradables et/ou compostables. Il est donc utile de fournir des compositions plastiques, et des articles plastiques rigides obtenus à partir de celles-ci, qui ne comprennent pas de composés plastiques essentiellement pétrosourcés. A l'inverse, il est utile de fournir des compositions plastiques, et des articles plastiques rigides obtenus à partir de celles-ci, qui comprennent des composés plastiques majoritairement, voire essentiellement biosourcés. De plus, il est utile de fournir des compositions plastiques, et des articles plastiques rigides obtenus à partir de celles-ci, comprenant des composés d'origine naturelle, tout en conservant des propriétés satisfaisantes, voire améliorées. En outre, il est nécessaire de fournir des compositions plastiques, et des articles plastiques rigides obtenus à partir de celles-ci, qui présentent une résistance suffisante à des conditions environnementales agressives, notamment une forte salinité, une forte exposition aux rayons ultraviolets, et/ou une forte variation de température. Enfin, il est donc nécessaire de fournir des compositions plastiques, et des articles plastiques rigides obtenus à partir de celles-ci, qui présentent une forte résistance aux chocs. Le document CN101508829 divulgue des compositions biodégradables ayant de bonnes propriétés mécaniques préparées à partir de poly(butylène succinate), d'acide polylactique, d'un agent plastifiant et d'une charge minérale.

## 3. Objectifs de l'invention

L'invention a notamment pour objectif de pallier ces inconvénients de l'art antérieur.

Plus précisément, un objectif de l'invention est de fournir, dans au moins un mode de réalisation, une composition plastique, et un article plastique rigide obtenu à partir de celle-ci, qui soit recyclable, biodégradable et/ou compostable.

Un autre objectif de l'invention est de fournir, dans au moins un mode de réalisation, une composition plastique, et un article plastique rigide obtenu à partir de celle-ci, obtenue au moins partiellement à partir de composés biosourcés.

Un autre objectif de l'invention est de fournir, dans au moins un mode de réalisation, une composition plastique, et un article plastique rigide obtenu à partir de celle-ci, comprenant une charge minérale d'origine naturelle, conférant des propriétés améliorées.

Un autre objectif de l'invention est de fournir, dans au moins un mode de réalisation, une composition plastique, et un article plastique rigide obtenu à partir de celle-ci, présentant une forte résistance aux milieux aqueux.

Un autre objectif de l'invention est de fournir, dans au moins un mode de réalisation, une composition plastique, et un article plastique rigide obtenu à partir de celle-ci, présentant une forte résistance à la salinité et à l'exposition aux rayons ultraviolets.

Un autre objectif de l'invention est de fournir, dans au moins un mode de réalisation, une composition plastique, et un article plastique rigide obtenu à partir de celle-ci, présentant des propriétés mécaniques améliorées et notamment une bonne résistance à la traction, à la flexion et aux chocs. En particulier, un objectif de l'invention est de fournir, dans au moins un mode de réalisation, un article plastique rigide pouvant, à vide, tomber d'une hauteur de 3 mètres sans casser et, en charge (35Kg), tomber d'une hauteur de 1 mètre sans casser.

Un autre objectif de l'invention est de fournir, dans au moins un mode de réalisation, une composition plastique, et un article plastique rigide obtenu à partir de celle-ci, présentant une bonne résistance aux variations de températures, notamment à des variations de températures comprises entre -10°C à 65°C.

Un autre objectif de l'invention est de fournir, dans au moins un mode de réalisation, un procédé de fabrication de ladite composition plastique, et dudit article plastique rigide obtenu à partir de celle-ci.

Enfin, un autre objectif de l'invention est de fournir, dans au moins un mode de réalisation, un article plastique rigide pouvant être utilisé pour le stockage et le conditionnement de produits destinés à l'alimentation humaine ou animale, notamment les produits de la mer.

## 4. Exposé de l'invention

Ces objectifs, ainsi que d'autres qui apparaîtront par la suite, sont atteints à l'aide d'une composition plastique recyclable, biodégradable et/ou compostable, apte au contact alimentaire, et à l'aide d'un article plastique rigide, recyclable, biodégradable et/ou compostable, apte au contact alimentaire et destiné au stockage et/ou au conditionnement de produits de la mer.

Selon l'invention, une telle composition comprend, en poids total de la composition :

- de 50% à 95%, préférentiellement de 76% à 90%, encore plus préférentiellement de 76% à 85%, d'un premier polymère bioplastique, ledit premier polymère bioplastique étant du poly(butylène succinate) ;

- de 1 à 20%, préférentiellement de 5 à 15%, d'une charge minérale ayant une microstructure en feuillets ;
- de 1% à 10%, préférentiellement de 3% à 7% d'un composé plastifiant ;
- de 0% à 10%, préférentiellement de 0% à 3% d'un acide gras ;
- de 0% à 5%, préférentiellement moins de 1%, d'un second polymère bioplastique, ledit second polymère bioplastique étant de l'acide.

Ladite composition peut comprendre en outre au moins un autre composé sélectionné parmi le groupe consistant en un composé allongeur de chaîne, une charge minérale additionnelle, des renforts fibreux choisis parmi les fibres naturelles animales, des renforts fibreux choisis parmi les fibres naturelles végétales, un composé retardateur de flamme biosourcé, un composé anti-ultraviolets, un agent améliorateur de propriétés organoleptiques et leurs mélanges.
Ledit premier polymère bioplastique peut être du poly(butylène succinate) biosourcé.
Ladite charge minérale peut être une charge biominérale comprenant du carbonate de calcium, préférentiellement ladite charge biominérale comprenant du carbonate de calcium a une microstructure à morphologie lamellaire-croisée ou à morphologie folié-croisée.
Ladite charge minérale peut comprendre des protéines fibreuses riches en acide aspartique et en acide glutamique.
Ladite charge minérale peut être de la poudre de coquilles d'huîtres du genre Crassostrea, préférentiellement de la poudre de coquille d'huîtres Crassostrea gigas.
La poudre de coquille d'huîtres du genre *Crassostrea* peut avoir une granulométrie comprise entre de 0, 1$\mu$m et 1000$\mu$m, préférentiellement comprise entre 0,1 $\mu$m et 100$\mu$m.
Ledit composé plastifiant peut être choisi parmi le groupe consistant en le polyacétate de vinyle et ses dérivés ; préférentiellement parmi le groupe consistant en le polyacétate de vinyle d'éthylène, le polyacétate de vinyle, et leurs mélanges ; très préférentiellement le composé plastifiant est le polyacétate de vinyle d'éthylène.
L'acide gras peut être choisi parmi le groupe consistant en les acides gras insaturés ; préférentiellement parmi le groupe des acides gras insaturés polymérisés ; très préférentiellement parmi le groupe consistant en les dimères d'acides gras insaturés, les trimères d'acides gras insaturés, et leurs mélanges.
Le composé allongeur de chaine peut être choisi parmi le groupe consistant en un composé époxy multifonctionnel. La composition peut comprendre de 0,1% à 0,5% dudit composé allongeur de chaine, en poids total de la composition.
La charge minérale additionnelle peut être une charge minérale géologique, comme par exemple du talc. La composition peut comprendre de 1% à 10% de ladite charge minérale additionnelle, en poids total de la composition.
Les renforts fibreux choisis parmi les fibres animales peuvent être des fibres issues de byssus de mollusques, préférentiellement de moules, très préférentiellement de *Mytilus edulis.* La composition peut comprendre de 0% à 10%, préférentiellement de 5% à 10%, desdites fibres issues de byssus de mollusques, en poids total de la composition. Lesdites fibres issues de byssus de mollusques peuvent être issues de byssus de moules, préférentiellement de byssus de *Mytilus edulis.*
Les renforts fibreux choisis parmi les fibres naturelles végétales peuvent être des fibres de bambou, des fibres de lin, des fibres de miscanthus, des fibres de bois ou des fibres cellulosiques. La composition peut comprendre de 0% à 20%, préférentiellement de 5% à 15%, dudit au moins un renfort fibreux choisi parmi les fibres naturelles végétales, en poids total de la composition.
Le composé retardateur de flamme biosourcé peut être choisi parmi le groupe consistant en des polymères dérivés du furfural, lui-même dérivé de l'hemicellulose (exemple : xylose). La composition peut comprendre de 0% à 2%, préférentiellement de 0,3% à 1%, dudit composé retardateur de flamme, en poids total de la composition.
L'agent améliorateur de propriétés organoleptique peut être choisi parmi le groupe consistant en un agent de brillance, un agent de blancheur, un pigment ou un colorant, respectivement de type carbonate de calcium, pigments naturels, colorants issus de plantes tinctoriales. La composition peut comprendre de 0% à 10% préférentiellement de 0,3% à 3%, dudit agent améliorateur de propriétés organoleptique, en poids total de la composition.
L'agent anti-ultraviolets (UV) peut être choisi parmi le groupe consistant en un azote hétérocyle. La composition peut comprendre de 0,1% à 3% dudit agent anti-UV, en poids total de la composition.
Dans un second aspect, l'invention concerne un procédé de fabrication de ladite composition plastique recyclable et avec une biodégradabilité adaptable, ledit procédé étant choisi parmi le groupe consistant en les procédés d'extrusion, d'injection, thermoformage, calandrage, les procédés de fabrication additive, et leurs combinaisons ; alternativement le procédé étant un procédé d'injection.
Dans un troisième aspect, l'invention concerne un article apte au contact alimentaire, comprenant des parois d'une épaisseur moyenne d'au moins 0,5 mm, ledit article étant obtenu à partir de ladite composition plastique recyclable et biodégradable.
Ledit article apte au contact alimentaire, peut comprendre des parois d'une épaisseur moyenne d'au moins 0,5 mm, ledit article comprenant, en poids total dudit article :

- de 50% à 95%, préférentiellement de 76% à 90%, encore plus préférentiellement de 76% à 85%, d'un premier polymère bioplastique, ledit premier polymère bioplastique étant du poly(butylène succinate) ;
- de 1 à 20%, préférentiellement de 5 à 15%, d'une charge minérale ayant une microstructure en feuillets ;
- de 1% à 10%, préférentiellement de 3% à 7% d'un composé plastifiant ;
- de 0% à 10%, préférentiellement de 0% à 3% d'un acide gras ;
- de 0% à 5%, préférentiellement moins de 1%, d'un second polymère bioplastique, ledit second polymère bioplastique étant de l'acide.

Ledit article peut comprendre en outre au moins un autre composé sélectionné parmi le groupe consistant en un composé allongeur de chaîne, une charge minérale additionnelle, des renforts fibreux choisis parmi les fibres naturelles animales, des renforts fibreux choisis parmi les fibres naturelles végétales, un composé retardateur de flamme biosourcé, un composé anti-ultraviolets, un agent améliorateur de propriétés organoleptiques et leurs mélanges.

Dans un quatrième aspect, ledit article peut être une caisse à marée ; alternativement ledit article peut être une caisse à poissons.

Dans un cinquième aspect, l'invention concerne un procédé de fabrication d'un article apte au contact alimentaire, comprenant :

- la fourniture de ladite composition plastique recyclable et biodégradable;
- l'injection de ladite composition en un article comprenant des parois d'une épaisseur moyenne d'au moins 0,5 mm.

Dans un sixième aspect, l'invention concerne l'utilisation dudit article apte au contact alimentaire, pour le stockage ou le conditionnement d'un produit destiné à l'alimentation humaine ou animale ; alternativement pour le stockage ou le conditionnement d'un produit de la mer ; alternativement pour le stockage ou le conditionnement d'un produit de la mer choisi parmi le groupe consistant en les poissons, les céphalopodes, les crustacés, les algues, et leurs mélanges ; alternativement pour le stockage ou le conditionnement de poissons.

Dans un dernier aspect, l'invention concerne l'utilisation de ladite composition plastique recyclable et biodégradable pour la fabrication d'articles rigides aptes au contact alimentaire.

On entend par « biosourcés » ou « *biosourcing* », les plastiques fabriqués à partir de ressources d'origine végétale telles que le maïs, le manioc, la pomme de terre, le bois, le coton, les algues, etc.

On entend par «recyclable », la récupération d'une partie ou de la totalité des constituants d'un matériau arrivé en fin de vie ou d'un matériau issu de résidus de fabrication afin de les réintroduire dans le cycle de production du même matériau ou d'un autre matériau.

On entend par « biodégradable» ou « biodégradabilité », la décomposition d'un composé chimique organique en dioxyde de carbone, méthane, eau et sels minéraux, des autres éléments présents (minéralisation) et apparition d'une nouvelle biomasse, sous l'action de micro-organismes en présence d'oxygène ; ou la décomposition en dioxyde de carbone, méthane, sels minéraux et création d'une nouvelle biomasse, en l'absence d'oxygène (cf. EN 13432:2000).

On entend par « compostable » ou « compostabilité », un procédé qui consiste à placer des produits fermentiscibles dans des conditions (températures, humidité, oxygénation, présence de micro-organismes du sol, etc.) permettant leur biodégradation. Pour être considéré comme compostable au sens de l'EN 13432, le matériau doit être dégradé à 90% de sa masse au bout de 6 mois dans un milieu de compost industriel ; la taille des résidus doit être inférieure à 2mm au bout de 3 mois de compostage ; et l'absence des effets écotoxiques doit être démontrée ainsi que la qualité agricole du compost obtenu.

La norme européenne EN 13432, de titre "Exigences relatives aux emballages valorisables par compostage et biodégradation - Programme d'essai et critères d'évaluation de l'acceptation finale des emballages", et adoptée en France sous la dénomination NF EN 13432, définit les caractéristiques des emballages "compostables" ou compatibles dans une filière de valorisation organique (par compostage ou digestion anaérobie). Elle s'applique tant aux emballages plastiques qu'aux matériaux ligno-cellulosiques, bien qu'elle exclue de son champ d'application les matières plastiques ne servant pas d'emballage (tels que les plastiques utilisés dans l'agriculture, les sacs pour la collecte des déchets).

La norme NF EN 14995 (Matières plastiques - Évaluation de la compostabilité - Programme d'essai et spécifications) comble cette lacune. Du point de vue technique, elle est identique à la norme NF EN 13432, mais elle couvre un nombre plus important d'applications, autres que l'emballage. La similitude du contenu technique des deux normes fait qu'une matière plastique conforme à la norme NF EN 13432 l'est aussi à la norme NF EN 14995 et vice versa.

Ces deux normes constituent la plus importante référence technique pour les producteurs de matériaux, les autorités publiques, les plates-formes de compostage, les organismes de certification et les consommateurs.

On entend par « microstructure » la structure d'un matériau révélée par des techniques de microscopie ayant un grossissement supérieur à 25. On entend par « microstructure en feuillets », des microstructures se présentant sous la forme de couches alternées de matériaux, également décrit comme des feuillets alternés de matériaux.

On entend par « charge biominérale » ou « charge issue d'un biominéral », une charge issue d'un minéral

synthétisée par des organismes vivants.

On entend par « produits de la mer », la faune et la flore prélevées aux milieux aquatiques, côtiers et lacustres et destinées à l'alimentation humaine ou animale, notamment les poissons, les céphalopodes, les crustacés, les coquillages et les algues.

Ainsi, l'invention repose sur une approche tout à fait nouvelle et originale de proposer une composition de plusieurs composés soigneusement sélectionnés, et aux proportions ajustées. L'incorporation du poly(butylène succinate) comme polymère bioplastique majoritaire, complémenté par l'incorporation d'une charge minérale ayant une microstructure en feuillets, notamment la poudre de coquille d'huîtres du genre *Crassostrea,* s'est avérée particulièrement intéressant. En effet, les inventeurs ont démontré que la formulation de poly(butylène succinate) avec une charge minérale ayant une microstructure à morphologie en feuillets, un composé plastifiant, et optionnellement un second polymère bioplastique spécifique, un acide gras et un composé allongeur de chaîne permettait l'obtention d'une composition plastique recyclable, biodégradable et compostable, et d'un article rigide obtenu à partir de celle-ci, aux propriétés améliorées.

En effet, cette combinaison de composés spécifiques dans des proportions ajustées a permis de compenser les propriétés mécaniques faibles du poly(butylène succinate), tout en obtenant une composition ayant un caractère hydrophobe satisfaisant, dans laquelle les différents composés sont dispersés de manière homogène, afin de contrôler l'hydrolyse du poly(butylène succinate) et donc d'augmenter la durée de vie des articles. Les inventeurs ont ainsi démontré notamment que ces compositions et articles étaient aptes au contact alimentaire, présentaient une forte résistance aux variations de températures, aux contraintes de traction, aux contraintes de flexion, aux chocs, aux milieux aqueux, à la salinité et aux rayons ultraviolets, tout en étant recyclables, biodégradables et/ou compostables. Cet article rigide s'est donc avéré particulièrement adapté au stockage, au conditionnement, au transport et/ou à la distribution de produits de la mer.

En particulier, les travaux menés par les inventeurs ont permis de constater que la charge minérale ayant une microstructure en feuillets permettait d'améliorer significativement les propriétés mécaniques de la composition et d'accroitre sa résistance à l'eau, pour autant qu'elle soit incorporée dans la composition à une concentration ajustée permettant sa bonne dispersion. Le recours à une telle charge minérale, en particulier une charge biominérale obtenue notamment à partir de coquille d'huîtres du genre *Crassostrea,* permet l'obtention de compositions et d'articles aux propriétés améliorées, en comparaison des compositions et articles comprenant des charges minérales d'origine géologique ou de synthèse.

En parallèle, le composé allongeur de chaine permet d'augmenter considérablement la masse molaire, permettant à ladite composition d'être plus durable et ainsi de respecter les exigences techniques de durée d'utilisation des caisses à poissons. L'ajout de cet allongeur de chaine permet, en outre, de diminuer la morphologie des mélanges en réduisant la taille des nodules du/des biopolymère(s), il joue ainsi le rôle de compatibilisant entre les chaînes de biopolymères car il diminue significativement la taille des phases et conduit à une morphologie plus fine. L'ajout de cet allongeur de chaine est optionnel. En effet, la nécessité d'ajouter un composé allongeur de chaine sera fonction de la masse molaire du premier plastique bioplastique, c'est-à-dire le poly(butylene succinate). Si le PBS a une masse molaire d'au moins 150000g/mol, préférentiellement entre 150000g/mol et 300000g/mol, très préférentiellement d'environ 200000g/mol, l'ajout d'un composé allongeur de chaine ne sera pas nécessaire. A contrario, si le PBS a une masse molaire inférieure à 150000g/mol, préférentiellement entre 34700g/mol et 150000g/mol, l'ajout d'un composé de chaine sera utile afin d'augmenter la masse molaire du PBS a une valeur seuil minimum de 150000g/mol. Un allongeur de chaine possède deux groupes fonctionnels capables de réagir avec les fonctions acides carboxyliques ou alcool du PBS. La quantité de cet agent doit être optimisée de façon à coupler deux chaines de PBS. De nombreux allongeurs de chaines sont utilisés dans les polyesters pour augmenter leur masse molaire, tels que les diépoxys et les bisoxazolines qui réagissent préférentiellement avec les fonctions acides carboxyliques, et les diisocyanates, les biscaprolactames et les dianhydrides qui réagissent avec les fonctions alcool.

Afin de potentialiser les propriétés des composés ci-avant et de renforcer leur compatibilité, il est ajouté un composé plastifiant. Celui-ci permet d'améliorer les propriétés d'élasticité, de résistance aux chocs, de rhéologie du poly(butylène succinate).

En outre, l'ajout d'un second polymère bioplastique, ledit second polymère bioplastique étant de l'acide polylactique, peut être utile en ce qu'il permet d'améliorer davantage les propriétés mécaniques du mélange même en faible proportion. L'acide polylactique réduit cependant la résistance à l'eau de la composition augmentant l'hydrolyse du poly(butylène succinate) ; il doit donc être incorporé dans la composition plastique recyclable et biodégradable à une concentration ajustée. L'ajout de l'acide polylactique est optionnel.

En outre, l'ajout d'un acide gras, du fait de son caractère hydrophobe, peut être utile en ce qu'il permet de renforcer davantage la résistance à l'eau et limite l'hydrolyse du poly(butylène succinate). L'ajout de cet acide gras réduit cependant la masse molaire de ladite composition, il doit donc être incorporé dans la composition plastique recyclable et biodégradable à une concentration ajustée. En effet, si la masse molaire de ladite composition est trop faible, elle atteindra sa masse molaire critique (Mc), masse ou laquelle ladite composition passe de la transition ductile (souple) à

fragile (cassant), rendant ladite composition non-conforme à l'application recherchée, le biopolymère devenant sans résistance thermique et mécanique suffisante. Cette masse molaire critique est aussi un indicateur en termes de valorisation (recyclage, biodégradabilité, compostabilité). L'ajout de cet acide gras est optionnel.

La composition comprend de 50% à 95%, préférentiellement de 76% à 90% encore plus préférentiellement de 76% à 85% d'un premier polymère bioplastique, ledit premier polymère bioplastique étant du poly(butylène succinate).

Le poly(butylène succinate) peut avoir une masse molaire d'au moins 150000g/mol, préférentiellement entre 150000g/mol et 300000g/mol, très préférentiellement d'environ 2000000g/mol. Lorsque le poly(butylène succinate) a une masse molaire d'au moins 150000g/mol, il n'est généralement pas nécessaire d'ajouter un composé allongeur de chaine à ladite composition.

Alternativement, le poly(butylène succinate) peut avoir une masse molaire inférieure à 150000g/mol, préférentiellement entre 34700g/mol et 150000g/mol. Lorsque le poly(butylène succinate) à une masse molaire inférieure à 150000g/mol, il est utile d'ajouter un composé allongeur de chaine à ladite composition, afin d'obtenir in fine un poly(butylène succinate) de masse molaire suffisante.

Différents modes de synthèse du PBS sont connus. Une première méthode, la plus répandue et la plus simple, est la polymérisation directe en voie fondue. Du PBS de masse molaire élevée est obtenu à partir de l'acide succinique et du 1,4-butanediol, en présence d'un catalyseur à base par exemple d'antimoine, d'étain et de titane, tels que le titanate de tetrabutyle et d'isopropyle.

Une deuxième méthode est la polycondensation directe par voie solvant, la distillation de l'eau dans les conditions azéotropiques permettant la conservation d'une concentration élevée en réactifs et la formation de polymères de masse molaire relativement élevée.

Une troisième méthode est la polymérisation par transestérification, le PBS étant synthétisé en masse à partir du diméthyl succinate et du 1,4-butanediol, et ayant une masse molaire peu élevée.

Une quatrième méthode est la synthèse de PBS par polycondensation peut être suivie d'une extension de chaines, permettant l'obtention de PBS de haute masse molaire. Un PBS obtenu par cette méthode est commercialisé par Showa Denko sous la dénomination PBS 1020 (masse molaire de 200 000 g/mol).

Une cinquième méthode est la synthèse de PBS biosourcé à partir d'acide succinique biosourcé. Cette synthèse de l'acide succinique biosourcé est différente de la synthèse de l'acide succinique pétrosourcé issu du naphta car l'acide succinique est issu de la fermentation bactérienne de sucres, plus particulièrement de la fermentation du glucose, du sucrose ou de la cellulose issue de ressources 100% renouvelables de sucre de canne, de tapioca, de blé et de maïs. La réaction n'utilise pas de catalyseur métallique ni de solvant chimique. La deuxième molécule entrant dans la synthèse du PBS biosourcé est le butanediol. Dans cette cinquième méthode, il est possible d'obtenir du butanediol biosourcé soit, à partir de glucose par fermentation directe du glucose en butanediol biosourcé soit par fermentation du glucose en acide succinique biosourcé puis par hydrogenation de cette acide succinique biosourcé en butanediol biosourcé. Cette cinquième méthode permet donc d'obtenir un PBS biosourcé à 50% ou à 100% selon l'origine des éléments les constituant.

La société PTT MCC commercialise du PBS à 50% biosourcé, fabriqué à partir d'acide succinique biosourcé commercialisé par la société BioAMBER.

Le PBS biosourcé a de meilleures performances que le PBS pétrosourcé, comme le montre le tableau 1 cidessous comparant les propriétés de PBS pétrosourcé et de PBS biosourcé.

Tableau 1

| | PBS pétrosourcé | | PBS biosourcé biosourcé |
|---|---|---|---|
| Densité (g/cm3) | 1.26 | | 1.26 |
| H.D.T (0,45 Mpa) | 97 | < | 110 |
| Température de fusion (°C) | 115 | | 115 |
| Température de transition vitreuse (°C) | -32 | < | -34 |
| MFR (190°C) (g/10min) | 25 | > | 22 |
| Module d'Young (Mpa) | 560 | < | 740 |
| Module de flexion (Mpa) | 580 | < | 630 |
| Contrainte au seuil d'écoulement (Mpa) | 34 | < | 40 |
| Contrainte à la rupture (Mpa) | 21 | < | 30 |
| Elongation au seuil d'écoulement (%) | 320 | > | 120 |

La composition comprend en outre de 1 à 20%, préférentiellement de 5 à 15%, d'une charge minérale ayant une microstructure en feuillets, préférentiellement une charge biominérale comprenant du carbonate de calcium, très préférentiellement, une charge biominérale comprenant du carbonate de calcium et comprenant une microstructure à morphologie lamellaire-croisée ou à morphologie folié-croisée. La microstructure en feuillets permet notamment d'améliorer significativement les propriétés mécaniques de la composition et d'accroître sa résistance à l'eau. Dans un mode de réalisation particulièrement préféré, la charge minérale est de la poudre de coquille d'huîtres du genre *Crassostrea,* préférentiellement de la poudre de coquilles d'huîtres *Crassostrea gigas.*

La charge minérale peut être une charge biominérale comprenant du carbonate de calcium. En effet, la cristallisation de minéraux de certaines espèces du monde vivant pour élaborer un squelette protecteur présente comme intérêt qu'elle implique un contrôle de la nature des cristaux, de leur forme et de leur disposition au sein dudit squelette protecteur. De telles microstructures régulièrement organisées ne se retrouvent pas dans les charges minérales issues de carrières géologiques, comme par exemple les roches calcaires, le talc ou le mica. Chez les animaux à squelette externe, tels les mollusques, le minéral le plus répandu est le carbonate de calcium. Le contre-ion calcium du carbonate de calcium peut être remplacé par de faibles proportions d'autres éléments alcalins tels le magnésium, le strontium et le baryum ou encore par des éléments métaux de transition, tels le manganèse. Le carbonate de calcium est cristallisé soit sous forme de calcite (avec une maille cristalline rhomboédrique) soit sous forme d'aragonite (avec une maille orthorhombique). Dans la coquille des mollusques, telle celle des huitres, les deux formes coexistent. La calcite et l'aragonite sont disposées en deux couches distinctes et superposées, la première constitue la couche prismatique, la seconde, la couche nacrée. Ces deux couches sont en outre recouvertes d'une fine couche externe appelée le *périostracum.*

La coquille des mollusques, telle celle des huîtres, comprend en outre une matrice organique. La matrice organique est constituée d'une trame polysaccharidique de bêta-chitine et de protéines fibreuses analogues aux protéines fibreuses de la soie. L'analyse des protéines qui se lient aux ions calcium révèle qu'elles sont riches en deux acides aminés, l'acide aspartique et l'acide glutamique, qui portent des groupes chargés négativement et permettent d'attirer les ions calcium chargés positivement et ainsi d'orienter la cristallisation. La phase minérale, comprenant principalement du carbonate de calcium, et la matrice organique, comprenant de l'acide aspartique et de l'acide glutamique, suivent une structure de type « brique et mortier » : l'alternance des briques (phase minérale) et du mortier (matrice organique) confère à l'ensemble une dureté et une résistance remarquables. Cette structure empêche les fissures ou les microfractures de se propager. Les briques sont des tablettes polygonales, dont la morphologie varie selon les espèces, et qui sont constituées d'une multitude de biocristaux de carbonate de calcium dont la cohérence est assurée par la matrice organique. La matrice organique est percée de pores irréguliers et dispersés qui forment un réseau de communication entre les différentes couches.

La majorité des études portant sur les mollusques, et donc des modèles de minéralisation qui en découlent,

s'est focalisée sur les coquilles ne présentant que des microstructures simples, en général une couche externe composée de larges prismes en calcite (par exemple : *Pinna nobilis*) et une couche interne composée de tablettes de nacre en aragonite (par exemple : *Pinctada margaritifera*). Mais les coquilles de mollusques peuvent être beaucoup plus complexes, présenter un plus grand nombre de couches, associant différents types microstructuraux. La nacre, toujours aragonitique, est très différente chez les bivalves (par exemple *Pinctada margaritifera*) et chez les gastéropodes (par exemple : *Haliotis*). Les microstructures à morphologie entrecroisés, notamment à morphologie lamellaire-croisée et à morphologie folié-croisée, seraient de loin les plus abondants. On entend par « microstructure à morphologie lamellaire-croisée », une microstructure de forme aragonitique composée d'unités entrelacées à plusieurs ordres de grandeur distincts. Les éléments constitutifs de base d'une microstructure à morphologie lamellaire-croisée sont de petites unités cristallines allongées de 100 à 200 nm de largeur (nommées lamelles de troisième ordre), juxtaposées et arrangées en feuillets parallèles (nommés lamelles de deuxième ordre) et dont l'épaisseur correspond à la largeur d'une lamelle de troisième ordre. L'empilement de lamelles de deuxième ordre constitue des unités plus larges de section à peu près rectangulaire (de premier ordre). Les lamelles de deuxième ordre changent de plus alternativement d'orientation une lamelle de premier ordre sur deux. Une microstructure à morphologie folié-croisée se différencie d'une microstructure à morphologie lamellaire-croisée en ce que la microstructure est de forme calcitique.

A l'intérieur de l'embranchement des mollusques, se trouve les huîtres du genre *Crassostrea* appartenant à la famille *Ostreidae,* de l'ordre *Ostreoida,* de la classe des bivalves. La coquille d'huîtres du genre Crassostrea comprend du carbonate de calcium marin et des oligo-éléments (sodium, soufre, magnésium, silicium, phosphore, potassium, fer, zinc, manganèse, fluorures). Sa composition en minéraux est d'environ 85% de carbonate de calcium et d'environ 15% d'oligo-éléments. Elle a comme avantage de posséder une microstructure en quasi-totalité de morphologie lamellaire-croisée et/ou de morphologie folié-croisée. Ainsi, l'incorporation de poudre de coquille d'huitre blanche dans les compositions et les articles selon l'invention s'est avérée particulièrement avantageuse pour leur conférer des propriétés améliorées. Ces avantages sont supérieurs à ceux obtenus avec des charges biominérales alternatives telles celles de moules ou de coquilles Saint-Jacques. La majeure partie de la production d'huîtres en France concerne l'huître creuse, aussi appelée parfois huître japonaise, dont le nom latin est *Crassostrea gigas.*

La composition comprend en outre 1% à 10%, préférentiellement de 3% à 7% d'un composé plastifiant. Le composé plastifiant peut être choisi parmi le groupe consistant en le polyacétate de vinyle et ses dérivés ; préférentiellement parmi le groupe consistant en le polyacétate de vinyle d'éthylène, le polyacétate de vinyle, et leurs mélanges ; très préférentiellement le composé plastifiant est le polyacétate de vinyle d'éthylène. Des plastifiants sont disponibles sous la dénomination commerciale Vinnex® de Wacker AG.

La composition comprend en outre de 0% à 5%, préférentiellement moins de 1% d'un second polymère bioplastique, ledit second polymère bioplastique étant l'acide polylactique ; avantageusement le second polymère bioplastique est un acide polylactique biosourcé sans OGM. Un acide polylactique biousourcé sans OGM est un acide polylactique obtenu à partir d'organismes non génétiquement modifiés.

La composition comprend en outre de 0% à 10%, préférentiellement de 0% à 3% d'un acide gras. L'acide gras peut être choisi parmi le groupe consistant en les acides gras insaturés ; préférentiellement parmi le groupe des acides gras insaturés polymérisés ; très préférentiellement le groupe consistant en les dimères d'acides gras insaturés, les trimères d'acides gras insaturés, et leurs mélanges. Des acides gras sont disponibles sous la dénomination commerciale Pripol™ de Croda. Ce sont des comonomères à chaine alkyle latérale, possédant un caractère plus hydrophobe que les monomères du PBS. Ces acides gras possèdent des groupes d'acides carboxyliques comme réactifs terminaux. Les acides gras commercialisés sous la dénomination Pripol™ sont issus de la transformation d'acides gras naturels. Plus la chaine alkyle latérale est longue et plus l'hydrophobie de surface est importante. L'angle de contact avec l'eau, et par conséquent l'hydrophobie des copolymères, augmente avec l'incorporation de chaines alkyles latérales dans la chaine de PBS. Aussi, le Pripol 1009F de Croda a été choisi pour sa longue chaine alkyle à 36 carbones, augmentant l'hydrophobie du PBS et limitant sa dégradation hydrolytique - Sa formule chimique est la suivante :

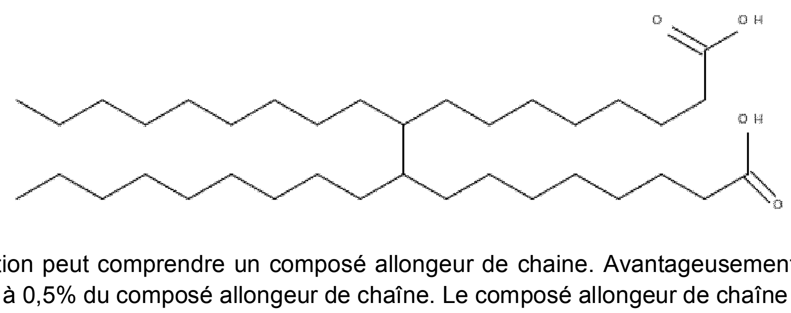

La composition peut comprendre un composé allongeur de chaine. Avantageusement, la composition peut comprendre de 0,1% à 0,5% du composé allongeur de chaîne. Le composé allongeur de chaîne peut être choisi parmi le groupe consistant en un composé époxy multifonctionnel. Des composés allongeur de chaine sont disponibles sous la dénomination commerciale Joncryl® de BASF possédant environ 9 fonctions époxy par mole et ayant une réactivité

importante avec les fonctions acides. Les composés allongeurs de chaines peut comprendre le motif de formule chimique suivante :

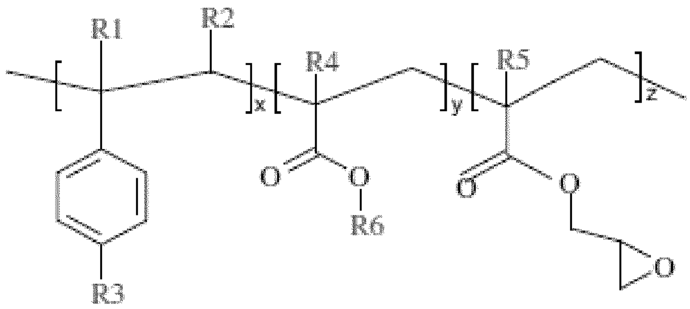

dans laquelle les radicaux R1 à R5 sont choisi, de manière indépendante, parmi H, CH3, ou d'un groupement alkyl; dans laquelle le radical R6 est un groupe alkyle ; et dans laquelle les indices x, y, z sont compris, de manière indépendante les uns des autres, entre 1 et 20.

La composition peut comprendre une charge minérale additionnelle. Cette charge minérale additionnelle peut être une charge minérale géologique, comme par exemple du talc, permettant d'assurer une meilleure stabilité dimensionnelle (faible coefficient de dilatation linéaire, retrait), sans porter atteinte à la ductilité des pièces moulées en injection. Des charges minérales de talc sont disponibles sous la dénomination commerciale Luzenac®.

La composition peut comprendre des renforts fibreux choisis parmi les fibres naturelles animales. La composition peut notamment comprendre des fibres issues de byssus de mollusques. Le byssus est un ensemble de fibres sécrétées par certains mollusques bivalves et qui leur permet d'adhérer au substrat. Les fibres de byssus sont utilisées pour leur résistance à l'humidité et à l'eau, et également en tant que renfort. Leur taille est comprise entre 0,1μm et 500μm, préférentiellement entre 0,1μm et 100μm. Parmi les fibres issues de byssus de mollusques, les fibres issues de byssus de moules, et notamment les fibres issues de byssus de *Mytilus edulis* se sont révélées intéressantes pour leurs propriétés de résistance en tant que renfort. Les fibres de byssus de Mytilus edulis sont nettoyées, éclaircies et micronisés avec une granulométrie de 0,1μm à 500μm. Ces fibres de byssus sont issues de la valorisation de déchets mytilicoles.

La composition peut comprendre un agent anti-UV choisi parmi le groupe consistant en un composé d'azote hétérocyle, permettant d'améliorer la tenue de la composition au rayonnement ultraviolet. Des composés anti-UV sont disponibles sous la dénomination commerciale CYASORB® de Solvay utilisé comme stabilisateur léger pour des compositions plastiques. Des particules ayant un diamètre inférieure à 75μm de composé chimique 2,2'-(1,4-phénylène)bis-(4H-3,1-benzexazin-4-one) sont particulièrement appropriées.

La composition peut être dépourvue de polymère bioplastique additionnel autre que lesdits premier et, optionnellement, un second polymères bioplastiques. En particulier, la composition peut être dépourvue de polymère bioplastique choisi parmi le groupe consistant en l'acide polyglycolique, le polybutylène succinate-co-adipate, le polybutylène succinate-co-lactate, le polybutylène adipate-co-téréphthalate, le poly-epsilon caprolate, le polydioxanone, et leurs mélanges.

Selon l'invention, ladite composition plastique recyclable et biodégradable peut être fabriquée par un procédé de fabrication choisi parmi le groupe consistant en les procédés d'extrusion, d'injection, thermoformage, calandrage, les procédés de fabrication additive, et leurs combinaisons ; alternativement par un procédé d'injection. A titre d'exemple, les procédés de fabrication additive comprennent l'impression par dépôt de fil fondu (FDM) et la stéréolithographie (SLS).

De manière préférée, ladite composition plastique recyclable et biodégradable est fabriquée par un procédé de fabrication comprenant les étapes suivantes :

a) fourniture d'un premier polymère bioplastique étant du poly(butylène succinate), d'une charge minérale comprenant une microstructure cristalline en feuillets, d'un composé plastifiant et optionnellement d'un second polymère bioplastique étant l'acide polylactique, d'un acide gras et/ou d'un composé allongeur de chaine.

b) mélange par extrusion dudit premier polymère bioplastique, d'au moins une partie dudit composé plastifiant et, optionnellement, dudit second polymère bioplastique, dudit acide gras et dudit composé allongeur de chaine, afin d'obtenir un premier mix;

c) ajout par extrusion audit premier mix de la partie restante dudit composé plastifiant et de ladite charge minérale comprenant une microstructure cristalline en feuillet, de fibres issues de byssus de mollusques optionnellement d'une charge minérale additionnelle et optionnellement d'un agent anti-UV afin d'obtenir une composition plastique recyclable et biodégradable.

Alternativement la charge minérale comprenant une microstructure cristalline en feuillets peut également être

ajoutée à l'étape (c).

La mise en œuvre d'un procédé en deux étapes, ou par l'utilisation d'une bi-vis plus longue avec incorporation en milieu de vis du second mix, a pour avantage de permettre d'obtenir une composition plastique recyclable et biodégradable présentant une bonne stabilité à l'hydrolyse, du fait notamment de la bonne dispersion des charges minérales.

Selon l'invention, ladite composition est utilisée pour la fabrication d'articles rigides aptes au contact alimentaire. En effet, l'invention concerne également l'éco-conception des articles destinés au stockage ou au conditionnement de produits de la mer, obtenus à partir de ladite composition plastique recyclable et biodégradable afin de limiter les impacts environnementaux pendant le cycle de vie du produit (matière premières, process, fabrication, consommation, transports, fin de vie, etc.).

Selon l'invention, l'article comprend des parois d'une épaisseur moyenne d'au moins 0,5 mm et est obtenu à partir de ladite composition plastique recyclable, biodégradable et/ou compostable.

L'article comprend des parois d'une épaisseur moyenne d'au moins 0,5mm ; préférentiellement de 0,5mm à 4 mm ; très préférentiellement de 2 à 3mm.

L'article comprend, en poids total dudit article :

- de 50% à 95%, préférentiellement de 76% à 90%, très préférentiellement de 76% à 85%, d'un premier polymère bioplastique, ledit premier polymère bioplastique étant du poly(butylène succinate) ;
- de 1 à 20%, préférentiellement de 5 à 15%, d'une charge minérale ayant une microstructure en feuillets ;
- de 1% à 10%, préférentiellement de 3% à 7% d'un composé plastifiant ;
- de 0% à 10%, préférentiellement de 0% à 3% d'un acide gras ;
- de 0% à 5%, préférentiellement moins de 1%, d'un second polymère bioplastique, ledit second polymère bioplastique étant de l'acide polylactique.

Ledit article peut comprendre en outre au moins un autre composé sélectionné parmi le groupe consistant en un composé allongeur de chaîne, une charge minérale additionnelle, des renforts fibreux choisis parmi les fibres naturelles animales, des renforts fibreux choisis parmi les fibres naturelles végétales, un composé retardateur de flamme biosourcé, un composé anti-ultraviolets, un agent améliorateur de propriétés organoleptiques et leurs mélanges.

L'article est préférentiellement obtenu par injection de ladite composition plastique recyclable et biodégradable. En effet, les inventeurs ont constaté que ladite composition plastique recyclable et biodégradable étant particulièrement adaptée aux procédés d'injection de grandes pièces, permettant dès lors une fabrication aisée de l'article.

De manière préférée, l'article à la forme d'une caisse. Ladite caisse comprend une paroi essentiellement horizontale formant le fond de la caisse et au moins une paroi latérale essentiellement verticale. La paroi essentiellement horizontale et la/les paroi(s) essentiellement verticale(s) définissent un volume dans lequel les produits de la mer peuvent être stockés et conditionnés. Le fond (paroi horizontale) de l'article peut avoir une section carrée ou rectangulaire, auquel cas celui-ci est circonscrit par quatre parois latérales.

Le dimensionnement des bacs se fait en fonction de la restriction des trappes de navires réfrigérés et des espaces de véhicules de transport routiers. Généralement, les bacs à poissons ont des dimensions classiques même si quelques fournisseurs de bacs ont des dimensionnements spécifiques. En soit, il n'y a pas de dimensionnement réglementé et obligatoire. Cependant une norme européenne de transport a été créée pour ces bacs. Les bacs gerbables en plastique normalisés sont adaptés aux palettes européennes (800 x 1200 mm ou 1000 x 1200 mm). La norme EURO pour ces bacs accepte les dimensions suivantes : 800x400mm ; 800x600mm ; 600x400mm ; 400x300mm ; 300x200mm ; 200x150mm (voir aussi la norme ISO 3394).

Lorsque le fond est de section carrée, l'article peut avoir une largeur de 150mm à 800mm et une hauteur de 100mm à 250mm. Lorsque le fond est de section rectangulaire, l'article peut avoir une largeur de 150mm à 600mm, une longueur de 200mm à 800mm et une hauteur de 100mm à 250mm.

De manière particulièrement préférée, l'article est une caisse à poissons. Ladite caisse à poisson peut comporter un couvercle étant obtenu également à partir de la composition plastique recyclable et biodégradable selon la présente invention, afin de permettre une bonne conservation des produits de la mer.

Selon l'invention, le procédé de fabrication d'un article apte au contact alimentaire comprend :

- la fourniture de ladite composition recyclable et biodégradable; et
- l'injection de ladite composition en un article comprenant des parois d'une épaisseur moyenne d'au moins 0,5mm.

Selon l'invention, ledit article est utilisé pour le stockage ou le conditionnement d'un produit destiné à l'alimentation humaine ou animale ; alternativement pour le stockage ou le conditionnement d'un produit de la mer ; alternativement pour le stockage ou le conditionnement d'un produit de la mer choisi parmi le groupe consistant en les poissons, les céphalopodes, les crustacés, les algues, et leurs mélanges ; alternativement pour le stockage ou le conditionnement de poissons.

## 4. Liste des figures

La figure 1 représente une image MEB de la composition CPM#1 (cycle 1)
La figure 2 représente une image MEB de la composition CPM#4
La figure 3 représente une image MEB de la composition CPM#1 après 9 cycles de recyclage (cycle 9)

## 5. Description de modes de réalisation de l'invention

Formulation

Plusieurs compositions selon l'invention ont été mises en œuvre. Ces compositions comprennent les composés et proportions telles qu'indiquées dans le tableau 2 ci-après :

Tableau 2

| Composés | CPM#1 | CPM#2 | CPM#3 | CPM#4 |
|---|---|---|---|---|
| | Proportion en poids total de la composition (ratio massique pour 1 kg de composition) | | | |
| Poly(butylène succinate) (biosourcé) | 78% | 85% | 78% | 78% |
| Charge minérale ayant une microstructure en feuillets | 12% (100% huîtres) | 10% (100% huîtres) | 12% (100% huîtres) | 12% (mélange coquilliers) |
| Polyacétate de vinyle d'éthylène (plastifiant) | 4% | 5% | 4% | 4% |
| Acide gras | 2% | 0% | 1.9% | 1.9% |
| Charge minérale additionnelle | 3% | 0% | 3% | 3% |
| Second polymère bioplastique | 1% | 0% | 1% | 1% |
| Agent anti-UV | 0% | 0% | 0.1% | 0.1% |

Les composés sont exprimés en pourcentage (et en poids) de principes actifs (composés en tant que tel), et non en pourcentage (et en poids) des matières premières les contenant.

Les sources de composés suivants sont utilisées :

- BioPBS FZ71PB de PTT MCC pour le poly(butylène succinate) (PBS biosourcé),
- Une poudre de coquille d'huîtres *Crassostrea gigas* pour la charge minérale ayant une microstructure en feuillets « 100% huîtres » et un mélange de coquilles d'huitres, de coquilles St-Jacques et de coquilles de moules pour le « mélange coquilliers » . Cette poudre est de plus non irradiée, non ionisée et sans additif.
- Vinnex 2504 de Wacker AG pour le polyacétate de vinyle d'éthylène,
- Pripol 1009F de Croda pour l'acide gras,
- Talc Luzenac HAR WR92 de Imerys pour la charge minérale additionnelle,
- Acide polylactique sans OGM (PLA sans OGM) pour le second polymère bioplastique.

Propriétés mécaniques, chimiques et physiques

CPM#1-CPM#2

Les compositions selon l'invention présentent des propriétés mécaniques, chimiques et physiques, qui les

rendent particulièrement adaptées pour la fabrication d'articles rigides destinés à l'utilisation pour le stockage et le conditionnement des produits de la mer. En outre, ces propriétés permettent une fabrication facilitée des compositions et articles correspondant, et assurent leur recyclabilité, leur biodégradabilité et/ou leur compostabilité.

Les composés bioplastiques, les compositions CPM#1-CPM#2 et articles dérivés présentent les propriétés suivantes détaillées dans le tableau 3 ci-après:

Tableau 3

| **Propriétés** | | | **Valeurs** |
|---|---|---|---|
| **Composés bioplastiques** | | | |
| Température de fusion (poly(butylène) de succinate (biosourcé) | | | 115°C |
| Température de fusion du mélange (poly(butylène) de succinate (biosourcé) avec le second polymère bioplastique | | | 150°C |
| Température de transition vitreuse (poly(butylène) de succinate (biosourcé) | | | -34°C |
| Résistance à la chaleur (fabrication) - CPM #1-CPM #3 | | | Jusqu'à 220°C |
| Résistance à la chaleur (lavage/stockage) | | | Jusqu'à 90°C |
| Résistance au froid (stockage) | | | -5°C |
| **Compositions CPM #1-CPM #2 et articles dérivés** | | | |
| **Propriétés** | **Valeurs** | **CPM#1** | **CPM#2** |
| Résistance aux chocs | 60KJ/$m^2$ à 90KJ/$m^2$ | 81 KJ/$m^2$ | 86 KJ/$m^2$ |
| Résistance à la traction | 700MPa à 1200MPa | 1114 MPa | 1100 MPa |
| Allongement au seuil | 10% à 25% | 18% | 12% |
| Contrainte au seuil | 25MPa à 35MPa | 29 MPa | 26 MPa |

En particulier, des mesures ont été effectuées sur le PBS biosourcé, à comparer avec un PBS pétrosourcé témoin, sur le PLA sans OGM et sur la composition CPM #1, à comparer avec un PEHD témoin et sont détaillées dans le tableau 4 ci-après :

Tableau 4

| | **PBS pétrosourcé (témoin)** | **PBS biosourcé** | **PLA sans OGM** | **PEHD (témoin)** | **CPM#1** |
|---|---|---|---|---|---|
| Nombre d'étapes de mise en œuvre | | | | | 1 |
| **Traction** | | | | | |
| Module Traction (Mpa) | 560 | 740 | 3655 | 750 | 1114 |
| Allongement seuil (mm) | 320 | 120 | 0 | 10 | 17,6 |
| Contrainte seuil (Mpa) | 34 | 40 | 54 | 23 | 29,8 |
| **Flexion** | | | | | |
| Contrainte rupture (Mpa) | 21 | 30 | 100 | 26 | 28,7 |
| **Chocs** | | | | | |
| Chocs (kJ/$m^2$) | 54 | 64 | 27 | 51 | 81 |
| Etat T°C ambiante | NB | NB | 0/10 | NB | NB |

Concernant les tests de résistance aux chocs, la notification N.B signifie « no break » ou « non cassant », lors d'un essai de choc Charpy. Un « mouton » métallique vient frapper l'éprouvette polymère afin de calculer l'absorption d'énergie du polymère (ce qu'on appelle le Chocs en KJ/$m^2$). Si l'éprouvette casse, on parle de « break » noté B, si l'éprouvette ne casse pas, on note N.B pour « no break ».

CPM#3-CPM#4

Les inventeurs ont démontré que la pureté et l'origine du biominéral influençait les propriétés mécaniques de ladite composition. Les résultats des tests mécaniques sur les compositions CPM#3 et CPM#4 ont permis aux inventeurs de prouver ces faits et sont détaillés dans le tableau 5 ci-après :

Tableau 5

| Matière | CPM #3 100% Huitres | CPM #4 mélange coquilliers |
|---|---|---|
| Module d'Young (Mpa) | 1114 | 713 |
| Contrainte rupture (Mpa) | 28,6 | 26 |
| Contrainte au seuil (Mpa) | 29,8 | 27 |
| Allongement au seuil (%) | 17,6 | 15 |
| Chocs (kJ/$m^2$) | 81 | 58 |

De plus, une analyse au microscope électronique à balayage (MEB) a permis d'analyser la structure des deux compositions et ainsi démontrer que la composition CPM#3 (voir Figure 1) était composé d'un biominéral organisé de façon lamellaire-croisé ou « en feuillet » alors que la composition CPM#4 (voir Figure 2) était composé d'un biominéral organisé parfois en grains, parfois en feuillet mais de dimensions plus petites. Ces observations ont également permis aux inventeurs de démontrer que l'origine, la composition d'un biominéral influençaient les propriétés mécaniques et, comparé à une charge minérale issu de carbonate de calcium géologique, que la structure elle-même influençait les propriétés mécaniques, et ceux, grâce à la biominéralisation de ce carbonate de calcium par des organismes vivants.

Propriétés de recyclabilité, biodégradabilité, compostabilité

Les inventeurs ont démontré que la composition plastique selon l'invention peut être recyclée jusqu'à 9 fois avant de perdre 22% de ses propriétés mécaniques. L'étude, dont les résultats sont présentés dans le tableau 6 ci-après, démontre que les variations de propriétés mécaniques du recyclage de la composition CPM #3 sont équivalentes au recyclage des polymères et des biopolymères conventionnels. De plus, ladite composition à une contrainte à la rupture, une contrainte au seuil, un allongement au seuil et une résistance aux chocs respectivement supérieures de +62%, +24%, +56% et +26% comparé au PEHD actuel.

Tableau 6

| CPM#3 | Cycles | | | | | | | | | PEHD1 | PEHD2 |
|---|---|---|---|---|---|---|---|---|---|---|---|
| | 1 | 2 | 3 | 4 | 5 | 6 | 7 | 8 | 9 | | |
| Module d'Young (Mpa) | 1114 | 1038 | 1021 | 940 | 924 | 933 | 880 | 928 | 869 | 958 | 815 |
| Contrainte rupture (Mpa) | 28,6 | 29 | 28,6 | 27,5 | 27,8 | 27,6 | 27,7 | 26,5 | 26,7 | 10,9 | |
| Contrainte au seuil (Mpa) | 29,8 | 29,9 | 29,7 | 28,6 | 28,9 | 29,2 | 28,4 | 28 | 27,6 | 22,7 | 18 |
| Allongem ent au seuil (%) | 17,6 | 15,6 | 15 | 14,7 | 15,6 | 15,4 | 14 | 13,8 | 14,2 | 9,9 | |
| Chocs (kJ/$m^2$) | 81 | 86 | 85 | 80 | 81 | 86 | 88 | 87 | 87 | 60 | 38 |

On remarque que les propriétés mécaniques du cycle 1 à 9 sont supérieures aux propriétés mécaniques de la composition comportant un mélange coquillers.

Une analyse MEB du cycle 1 de la composition CPM#3 (voir Figure 1) et du cycle 9 de la composition CPM#3 (voir Figure 3) a permis de démontrer que l'organisation lamellaire-croisé ou « feuillets » est toujours visible même après 9 cycles de recyclage.

La composition CPM#3 a également été évaluée en conditions d'immersion (eau de mer) pendant 1 an. Les échantillons sous forme d'éprouvettes ont été immergés dans l'eau de mer depuis 13 mois. Le suivi de l'absorption d'eau et la perte de masse ont été réalisées par pesée manuelle.

Le suivi de la perte de masse est une méthode très utilisée pour suivre la dégradation des biopolymères. De la même façon que pour déterminer la quantité d'eau absorbée, les échantillons sont pesés après chaque prélèvement et le pourcentage de perte, à chaque instant est déterminé grâce à l'équation suivante :

$$WLt(\%) = \frac{W0 - Wd}{W0} \times 100$$

Les résultats de l'expérience ont montré qu'il n'y avait pas de pertes de masse comparé à une éprouvette stockée dans des conditions de stockage industriel (température ambiante, à l'abri du soleil et de l'humidité), ce qui démontre qu'il n'y a pas de début de biodégradation de la composition au bout de 1 an. Une très légère augmentation de la masse a été remarquée pour certaines éprouvettes qui peut-être dû à trois phénomènes :

- La composition a absorbé une très légère quantité d'eau comme tous les polymères (cf : %absorption d'eau des polymères)
- La composition a absorbé une quantité d'eau plus importante et a ainsi favorisée l'hydrolyse du matériau lui permettant alors d'absorber une quantité d'eau plus importante
- La composition s'est d'abord hydrolysée et a ensuite permis l'absorption d'eau par la composition

La composition est donc stable sur 1 an, ce qui est la durée d'utilisation moyenne des articles de la mer.

En conclusion, les polymères qui se biodégradent dans l'environnement terrestre, dans des conditions favorables (par exemple Acc, PBS, PCL, PES, PVA), se biodégradent aussi dans le milieu marin, mais beaucoup plus lentement. Les inventeurs estiment la biodégradation de ladite composition à une trentaine d'années.

Par ailleurs, les compositions selon l'invention peuvent être attaquées par la protéinase K secrétée par les microorganismes qui l'utilisent comme source d'énergie. Dans des conditions bien particulières telles qu'un environnement chaud et humide, de type composts industriels, les compositions selon l'invention peuvent se dégrader beaucoup plus rapidement, de l'ordre de 90% biodégradé en 6 mois.

## Procédés de fabrication de la composition selon l'invention

La composition est compoundée par extrusion. C'est-à-dire que les biopolymères et additifs sont mélangés à l'aide d'une extrudeuse. L'extrudeuse utilisée pour les tests est une mini-extrudeuse monovis de laboratoire. Elle comporte une vis sans fin qui tourne à l'intérieur du fourreau cylindrique régulé en température par des systèmes de chauffe et de refroidissement. Les biopolymères ainsi que les additifs sont insérés, selon un ordre précis, dans la trémie située à l'extrémité de la machine. La fonction de l'extrudeuse est de convoyer les biopolymères et les additifs de ladite composition, de les fondre, les mettre en pression et de les mélanger afin d'obtenir un jonc en sortie de filière. Le jonc est ensuite refroidi, soit par air comprimé, soit dans un bain de refroidissement, soit les deux, puis granulé afin d'obtenir ladite composition qui sera ensuite mise en œuvre par injection.

Pour chaque gamme de ladite composition, il a été préparé 1kg de matière. Le réglage des températures des différentes zones de l'extrudeuse a été réalisé en cohérence avec les températures de changement de phases des biopolymères de ladite composition. Le réglage de la vitesse de vis à l'intérieur du fourreau a permis d'assurer le bon mélange de ladite composition par cisaillement de matière.

De manière plus descriptive, le compoundage de ladite composition s'établit de la façon suivante :

Une première étape de compoundage/extrusion selon la composition du PBS de la moitié du pourcentage de plastifiant et optionnellement de l'acide gras, de l'allongeur de chaine et/ou du PLA. Les composés sont alors mélangés dans la vis pour être extrudés puis granulés. Dans le cas de l'utilisation d'un acide gras, une autre solution est de compounder d'abord la composition du PBS, de la moitié du pourcentage de plastifiant et optionnellement de l'allongeur de chaine et du PLA puis d'incorporer par dosage d'additifs liquide en extrusion l'acide gras.

Une deuxième étape de compoundage de la composition obtenue à la fin de la première étape de compoundage/extrusion avec l'incorporation de l'autre moitié du pourcentage de plastifiant, de la charge minérale ayant une microstructure en feuillets et optionnellement de la charge minérale additionnelle.

Le fait de procéder en 2 étapes est important pour la bonne stabilité à l'hydrolyse dû à la bonne dispersion de la charge minérale ayant une microstructure en feuillets et optionnellement de la charge minérale additionnelle. A contrario, si le mélange était réalisé en une seule étape, ladite composition favoriserait l'apparition d'agglomérats de la/les charge(s) minérale(s) dû à une mauvaise dispersion, ce qui entrainerait une diminution des propriétés mécaniques, de résistance à l'eau et une augmentation de la vitesse de dégradation. De plus le mélange en une seule étape ne permettrait pas à l'allongeur de chaine de réagir avec le/les biopolymère(s) car la/les charge(s) minérale(s) empêcherait cette réaction.

Une solution alternative au procédé décrit ci-dessus en deux étapes à l'aide d'une extrudeuse mono-vis serait d'utiliser une extrudeuse bi-vis avec une longueur de vis plus longue afin de permettre une meilleure homogénéisation du mélange. De plus, une extrudeuse bi-vis avec une trémie en milieu de dosage permettrait d'incorporer l'autre moitié du pourcentage de plastifiant et la/les charge(s) minérale(s) en une seule étape.

Réglages de l'extrudeuse monovis pour les différents essais :

Tableau 4

| Réglages extrudeuse Etape 1 | | | | | |
|---|---|---|---|---|---|
| Zone | / | 1 | 2 | 3 | 4 |
| Température | [°C] | 185 | 190 | 195 | 195 |
| Vitesse | [tr/min] | 40 | | | |

| Réglages extrudeuse Etape 2 | | | | | |
|---|---|---|---|---|---|
| Zone | / | 1 | 2 | 3 | 4 |
| Température | [°C] | 180 | 185 | 185 | 190 |
| Vitesse | [tr/min] | 60 | | | |

Actuellement, la matière extrudée est principalement du PEHD avec des températures de mise en œuvre comprise entre 200 et 280°C. Ladite composition ayant une température de mise en œuvre comprise entre 180 et 195°C, l'invention porte aussi sur la réduction des impacts environnementaux lors de l'étape de mise en œuvre avec la réduction des températures de chauffe de 5 à 100°C entrainant une réduction de la consommation d'énergie de la machine et également une diminution du temps de chauffe machine.

Procédés de fabrication de l'article selon l'invention

Ladite composition est injectée dans une presse à injection. La transformation de ladite composition par injection consiste à remplir les cavités froides d'un moule avec ladite composition à l'état fondu, puis à démouler la pièce obtenue après refroidissement et solidification de la matière plastique.
Le cycle d'injection se déroule de la façon suivante :

- Fermeture et verrouillage du moule ;
- Dosage de la matière ;
- Injection de la matière fondue dans le moule ;
- Maintien de la matière fondue sous pression ;
- Ouverture du moule ; et
- Ejection des pièces.

La presse à injecter utilisée pour réaliser des éprouvettes d'essais est une Battenfeld HM 65/350. Pour l'injection des caisses à poissons une presse à injecter plus volumineuse est utilisé comme, par exemple, une presse à injecter BILLION H2100/400.
Les réglages sont paramétrés en fonction de ladite composition. En sortie de machine on récupère les éprouvettes.
Afin d'avoir une éprouvette d'une qualité optimale, il faut prendre en compte plusieurs paramètres. Tout comme l'extrusion, ces critères vont dépendre de ladite composition à injecter. En ce qui concerne les températures, ce sont celles d'injection et du moule qui vont être importantes pour que ladite composition soit bien fondue lorsqu'elle est injectée sous pression dans le moule et que cette composition soit ensuite refroidie par le moule pour faciliter le démoulage.
La pression d'injection et de maintien de la composition sont aussi des paramètres importants pour que la matière prenne la forme souhaitée et qu'elle soit compacte, ce qui améliore la qualité du produit. Si la pression est trop élevée, il y aura des bavures, si elle est trop faible en revanche, il y aura un retrait volumique.
Les temps de maintien ainsi que de refroidissement laisse le temps à la matière de baisser en température, afin qu'elle repasse sous la température de cristallisation et qu'elle s'éjecte bien du moule à la fin du cycle.

Tableau 5

| Réglages cycle d'injection de ladite composition | | |
|---|---|---|
| Température d'injection | °C | 190 |
| Température du moule | °C | 25 |
| Pression d'injection | bar | 1600-1800 |
| Pression de maintien | bar | 1600-1800 |
| Temps de maintien | s | 9-10 |
| Temps de refroidissement | s | 20-25 |

Actuellement, les caisses à poissons sont principalement injectés avec du PEHD avec des températures de mise en œuvre comprise entre 200 et 280°C. Ladite composition ayant une température de mise en œuvre comprise entre 180 et 195°C, l'invention porte aussi sur la réduction des impacts environnementaux lors de l'étape de mise en œuvre avec la réduction des températures de chauffe de 5 à 100°C entrainant une réduction de la consommation d'énergie de la machine et une diminution du temps de chauffe machine également.

De plus, l'indice de fluidité à chaud (ou « *Melt Flow Rate* » en anglais, MFR) des caisses à poissons en PEHD actuellement utilisées sont généralement compris entre 25 et 30g/10min. Ladite composition a un indice de fluidité à chaud de même ordre, voire supérieur, compris entre 23 et 42 g/10 min, permettant la fabrication d'articles de grande taille.

## Revendications

**1.** Composition plastique recyclable et biodégradable, ladite composition comprenant, en poids total de la composition :

- de 50% à 95%, préférentiellement de 76% à 90%, encore plus préférentiellement de 76% à 85%, d'un premier polymère bioplastique, ledit premier polymère bioplastique étant du poly(butylène succinate) ;
- de 1 à 20%, préférentiellement de 5 à 15%, d'une charge minérale ayant une microstructure en feuillets ;
- de 1% à 10%, préférentiellement de 3% à 7% d'un composé plastifiant ;
- de 0% à 10%, préférentiellement de 0% à 3% d'un acide gras ;
- de 0% à 5%, préférentiellement moins de 1%, d'un second polymère bioplastique, ledit second polymère bioplastique étant de l'acide polylactique ;
- optionnellement au moins un autre composé sélectionné parmi le groupe consistant en un composé allongeur de chaîne, une charge minérale additionnelle, des renforts fibreux choisis parmi les fibres naturelles animales, des renforts fibreux choisis parmi les fibres naturelles végétales, un composé retardateur de flamme biosourcé, un composé anti-ultraviolets, un agent améliorateur de propriétés organoleptiques ou leurs mélanges.

**2.** Composition selon la revendication 1, **caractérisé en ce que** ledit premier polymère bioplastique est du poly(butylène succinate) biosourcé.

**3.** Composition, selon l'une quelconque des revendications précédentes, **caractérisée en ce que** ladite charge minérale est une charge biominérale comprenant du carbonate de calcium, préférentiellement ladite charge biominérale comprenant du carbonate de calcium a une microstructure à morphologie lamellaire-croisée ou à morphologie foliécroisée.

**4.** Composition, selon les revendications 3, **caractérisée en ce que** ladite charge minérale est de la poudre de coquille d'huîtres du genre *Crassostrea,* préférentiellement de la poudre de coquille d'huîtres *Crassostrea gigas.*

**5.** Composition, selon l'une quelconque des revendications précédentes, **caractérisée en ce que** le composé plastifiant est choisi parmi le groupe consistant en le polyacétate de vinyle et ses dérivés ; préférentiellement parmi le groupe consistant en le polyacétate de vinyle d'éthylène, le polyacétate de vinyle, et leurs mélanges ; très préférentiellement parmi le composé plastifiant est le polyacétate de vinyle d'éthylène.

**6.** Composition, selon l'une quelconque des revendications précédentes, **caractérisée en ce que** l'acide gras est choisi parmi le groupe consistant en les acides gras insaturés ; préférentiellement parmi le groupe des acides gras

insaturés polymérisés ; très préférentiellement parmi le groupe consistant en les dimères d'acides gras insaturés, les trimères d'acides gras insaturés, et leurs mélanges.

7. Composition, selon l'une quelconque des revendications précédentes, **caractérisée en ce que** le composé allongeur de chaine est choisi parmi le groupe consistant en un composé époxy multifonctionnel.

8. Composition, selon l'une quelconque des revendications précédentes, comprenant de 0,1% à 0,5% dudit composé allongeur de chaîne, en poids total de la composition.

9. Composition selon l'une quelconque des revendications précédentes comprenant des fibres issues de byssus de mollusques, préférentiellement de moules, très préférentiellement de *Mytilus edulis.*

10. Procédé de fabrication d'une composition plastique recyclable et biodégradable selon l'une quelconque des revendications précédentes, ledit procédé étant choisi parmi le groupe consistant en les procédés d'extrusion, d'injection, thermoformage, calandrage, les procédés de fabrication additive, et leurs combinaisons ; préférentiellement le procédé est un procédé d'injection.

11. Article apte au contact alimentaire, comprenant des parois d'une épaisseur moyenne d'au moins 0,5 mm, ledit article étant obtenu à partir de la composition plastique recyclable et biodégradable selon l'une quelconque des revendications 1 à 9.

12. Article apte au contact alimentaire, comprenant des parois d'une épaisseur moyenne d'au moins 0,5 mm, ledit article comprenant, en poids total dudit article :

    - de 50% à 95%, préférentiellement de 76% à 90%, très préférentiellement de 76% à 85%, d'un premier polymère bioplastique, ledit premier polymère bioplastique étant du poly(butylène succinate) ;
    - de 1 à 20%, préférentiellement de 5 à 15%, d'une charge minérale ayant une microstructure en feuillets ;
    - de 1% à 10%, préférentiellement de 3% à 7% d'un composé plastifiant ;
    - de 0% à 10%, préférentiellement de 0% à 3% d'un acide gras ;
    - de 0% à 5%, préférentiellement moins de 1%, d'un second polymère bioplastique, ledit second polymère bioplastique étant de l'acide polylactique ;
    - optionnellement au moins un autre composé sélectionné parmi le groupe consistant en un composé allongeur de chaîne, une charge minérale additionnelle, des renforts fibreux choisis parmi les fibres naturelles animales, des renforts fibreux choisis parmi les fibres naturelles végétales, un composé retardateur de flamme biosourcé, un composé anti-ultraviolets, un agent améliorateur de propriétés organoleptiques ou leurs mélanges.

13. Article, selon l'une des revendications 11 ou 12, ledit article étant une caisse à marée ; alternativement ledit article étant une caisse à poissons.

14. Utilisation de l'article selon l'une des revendications 11 à 13, pour le stockage ou le conditionnement d'un produit destiné à l'alimentation humaine ou animale ; alternativement pour le stockage ou le conditionnement d'un produit de la mer ; alternativement pour le stockage ou le conditionnement d'un produit de la mer choisi parmi le groupe consistant en les poissons, les céphalopodes, les crustacés, les algues, et leurs mélanges ; alternativement pour le stockage ou le conditionnement de poissons.

15. Utilisation de la composition selon l'une quelconque des revendications 1 à 9 pour la fabrication d'articles aptes au contact alimentaire.

## Patentansprüche

1. Recycelfähige und biologisch abbaubare Kunststoffzusammensetzung, wobei die Zusammensetzung, bezogen auf das Gesamtgewicht der Zusammensetzung, umfasst:

    - von 50 % bis 95 %, vorzugsweise von 76 % bis 90 %, bevorzugter von 76 % bis 85 %, eines ersten Biokunststoffpolymers, wobei das erste Biokunststoffpolymer Poly(butylensuccinat) ist;
    - von 1 bis 20 %, vorzugsweise von 5 bis 15 %, eines mineralischen Füllstoffs mit einer blättrigen Mikrostruktur;
    - von 1 % bis 10 %, vorzugsweise von 3 % bis 7 %, einer Weichmacherverbindung;

- von 0 % bis 10 %, vorzugsweise von 0 % bis 3 %, einer Fettsäure;
- von 0 % bis 5 %, vorzugsweise weniger als 1 %, eines zweiten Biokunststoffpolymers, wobei das zweite Biokunststoffpolymer Polymilchsäure ist;
- gegebenenfalls mindestens eine andere Verbindung, die ausgewählt ist aus der Gruppe bestehend aus einer Kettenverlängererverbindung, einem zusätzlichen mineralischen Füllstoff, Faserverstärkungen, die ausgewählt sind aus natürlichen tierischen Fasern, Faserverstärkungen, die ausgewählt sind aus natürlichen pflanzlichen Fasern, einem biobasierten Flammhemmer, einer Anti-Ultraviolett-Verbindung, einem Mittel zur Verbesserung der organoleptischen Eigenschaften oder ihren Mischungen.

**2.** Zusammensetzung nach Anspruch 1,
**dadurch gekennzeichnet, dass** das erste Biokunststoffpolymer biobasiertes Poly(butylensuccinat) ist.

**3.** Zusammensetzung nach einem der vorhergehenden Ansprüche,
**dadurch gekennzeichnet, dass** der mineralische Füllstoff ein biomineralischer Füllstoff ist, der Calciumcarbonat umfasst, wobei vorzugsweise der biomineralische Füllstoff, der Calciumcarbonat umfasst, eine Mikrostruktur mit einer lamellaren-gekreuzten Morphologie oder einer plättchenartigen-gekreuzten Morphologie aufweist.

**4.** Zusammensetzung nach Anspruch 3,
**dadurch gekennzeichnet, dass** der mineralische Füllstoff ein Pulver aus Schalen von Austern der Gattung *Crassostrea,* vorzugsweise ein Pulver aus Schalen von *Crassostrea gigas* Auster ist.

**5.** Zusammensetzung nach einem der vorhergehenden Ansprüche,
**dadurch gekennzeichnet, dass** die Weichmacherverbindung ausgewählt ist aus der Gruppe bestehend aus Polyvinylacetat und seinen Derivaten; vorzugsweise aus der Gruppe bestehend aus Polyethylenvinylacetat, Polyvinylacetat und ihren Mischungen; sehr bevorzugt die Weichmacherverbindung Polyethylenvinylacetat ist.

**6.** Zusammensetzung nach einem der vorhergehenden Ansprüche,
**dadurch gekennzeichnet, dass** die Fettsäure ausgewählt ist aus der Gruppe bestehend aus ungesättigten Fettsäuren; vorzugsweise aus der Gruppe von polymerisierten ungesättigten Fettsäuren; sehr bevorzugt aus der Gruppe bestehend aus ungesättigten Fettsäuredimeren, ungesättigten Fettsäuretrimeren und ihren Mischungen.

**7.** Zusammensetzung nach einem der vorhergehenden Ansprüche,
**dadurch gekennzeichnet, dass** die Kettenverlängererverbindung ausgewählt ist eine multifunktionellen Epoxy-Verbindung.

**8.** Zusammensetzung nach einem der vorhergehenden Ansprüche, umfassend von 0,1 % bis 0,5 % der Kettenverlängererverbindung, bezogen auf das Gesamtgewicht der Zusammensetzung.

**9.** Zusammensetzung nach einem der vorhergehenden Ansprüche, umfassend Fasern, die von dem Byssus von Schalentieren, vorzugsweise von Muscheln, sehr bevorzugt von *Mytilus edulis* stammen.

**10.** Verfahren zur Herstellung einer recycelbaren und biologisch abbaubaren Kunststoffzusammensetzung nach einem der vorhergehenden Ansprüche, wobei das Verfahren ausgewählt wird aus der Gruppe bestehend aus Extrusions-, Spritzguss-, Thermoform-, Kalandrierverfahren, Verfahren zur Herstellung von Additiven und ihren Kombinationen; wobei das Verfahren vorzugsweise ein Spritzgussverfahren ist.

**11.** Artikel, welcher für den Kontakt mit Lebensmitteln geeignet ist, umfassend Wände mit einer mittleren Dicke von mindestens 0,5 mm, wobei der Artikel aus der recycelbaren und biologisch abbaubaren Kunststoffzusammensetzung nach einem der Ansprüche 1 bis 9 erhalten wird.

**12.** Artikel, welcher für den Kontakt mit Lebensmitteln geeignet ist, umfassend Wände mit einer mittleren Dicke von mindestens 0,5 mm, wobei der Artikel, bezogen auf das Gesamtgewicht des Artikels, umfasst:

- von 50 % bis 95 %, vorzugsweise von 76 % bis 90 %, sehr bevorzugt von 76 % bis 85 %, eines ersten Biokunststoffpolymers, wobei das erste Biokunststoffpolymer Poly(butylensuccinat) ist;
- von 1 bis 20 %, vorzugsweise von 5 bis 15 %, eines mineralischen Füllstoffs mit einer blättrigen Mikrostruktur;
- von 1 % bis 10 %, vorzugsweise von 3 % bis 7 %, einer Weichmacherverbindung;
- von 0 % bis 10 %, vorzugsweise von 0 % bis 3 %, einer Fettsäure;

- von 0 % bis 5 %, vorzugsweise weniger als 1 %, eines zweiten Biokunststoffpolymers, wobei das zweite Biokunststoffpolymer Polymilchsäure ist;
- gegebenenfalls mindestens eine andere Verbindung, die ausgewählt ist aus der Gruppe bestehend aus einer Kettenverlängererverbindung, einem zusätzlichen mineralischen Füllstoff, Faserverstärkungen, die ausgewählt sind aus natürlichen tierischen Fasern, Faserverstärkungen, die ausgewählt sind aus natürlichen pflanzlichen Fasern, einem biobasierten Flammhemmer, einer Anti-Ultraviolett-Verbindung, einem Mittel zur Verbesserung der organoleptischen Eigenschaften oder ihren Mischungen.

**13.** Artikel nach einem der Ansprüche 11 oder 12,
wobei der Artikel ein Behälter für Meeresfrüchte ist; wobei der Artikel alternativ dazu ein Behälter für Fisch ist.

**14.** Verwendung des Artikels nach einem der Ansprüche 11 bis 13, zur Lagerung oder zur Verpackung eines Produkts, das für den menschlichen oder tierischen Verzehr bestimmt ist; alternativ dazu zur Lagerung oder zur Verpackung eines Meeresfrüchteprodukts; alternativ dazu zur Lagerung oder zur Verpackung eines Meeresfrüchteprodukts, das ausgewählt wird aus der Gruppe bestehend aus Fischen, Kopffüßern, Krustentieren, Algen und ihren Mischungen; alternativ dazu zur Lagerung oder zur Verpackung von Fischen.

**15.** Verwendung der Zusammensetzung nach einem der Ansprüche 1 bis 9, zur Herstellung von Artikeln, die für einen Kontakt mit Lebensmitteln geeignet sind.

## Claims

**1.** Recyclable and biodegradable plastic composition, said composition comprising, by total weight of the composition:

- from 50% to 95%, preferably from 76% to 90%, even more preferably from 76% to 85% of a first bioplastic polymer, said first bioplastic polymer being poly(butylene succinate);
- from 1 to 20%, preferably from 5 to 15%, of an inorganic filler having a lamellar microstructure;
- from 1% to 10%, preferably from 3% to 7% of a plasticiser compound;
- from 0% to 10%, preferably from 0% to 3% of a fatty acid;
- from 0% to 5%, preferably less than 1%, of a second bioplastic polymer, said second bioplastic polymer being polylactic acid;
- optionally at least one further compound selected from the group consisting of a chain extender compound, an additional inorganic filler, fibrous reinforcements selected from natural animal fibres, fibrous reinforcements selected from natural vegetable fibres, a bio-based flame retardant compound, an anti-UV compound, an organoleptic enhancing agent or mixtures thereof.

**2.** Composition according to claim 1, **characterised in that** said first bioplastic polymer is biobased poly(butylene succinate).

**3.** Composition, according to any one of the preceding claims, **characterised in that** said inorganic filler is a bioinorganic filler comprising calcium carbonate, preferably said bioinorganic filler comprising calcium carbonate with a microstructure having a crossed-lamellar morphology or cross-foliated morphology.

**4.** Composition according to claim 3, **characterised in that** said inorganic filler is oyster shell powder of the genus *Crassostrea,* preferably oyster shell powder of the genus *Crassostrea gigas.*

**5.** Composition according to any one of the preceding claims, **characterised in that** the plasticiser compound is selected from the group consisting of polyvinyl acetate and its derivatives; preferably from the group consisting of ethylene vinyl acetate, polyvinyl acetate, and mixtures thereof; highly preferably among the plasticiser compound is ethylene vinyl acetate.

**6.** Composition according to any one of the preceding claims, **characterised in that** the fatty acid is selected from the group consisting of unsaturated fatty acids; preferably from the group of polymerised unsaturated fatty acids; highly preferably from the group consisting of unsaturated fatty acid dimers, unsaturated fatty acid trimers, and mixtures thereof.

**7.** Composition according to any one of the preceding claims, **characterised in that** the chain extender compound is

selected from the group consisting of a multifunctional epoxy compound.

**8.** Composition according to any one of the preceding claims, comprising from 0.1% to 0.5% of said chain extender compound in the total weight of the composition.

**9.** Composition according to any one of the preceding claims, comprising fibres derived from mollusc byssus, preferably of mussels, and highly preferably of *Mytilus edulis.*

**10.** Method of manufacturing a recyclable and biodegradable plastic composition according to any one of the preceding claims, said method being selected from the group consisting of extrusion, injection, thermoforming, calendering, additive manufacturing processes, and combinations thereof; preferably the method is an injection method.

**11.** Article suitable for food contact, having walls with an average thickness of at least 0.5 mm, said article being obtained from the recyclable and biodegradable plastic composition according to any one of claims 1 to 9.

**12.** Article suitable for food contact, having walls with an average thickness of at least 0.5 mm, said article comprising, by total weight of said article:

- from 50% to 95%, preferably from 76% to 90%, and highly preferably 76% to 85% of a first bioplastic polymer, said first bioplastic polymer being poly(butylene succinate);
- from 1 to 20%, preferably from 5 to 15%, of an inorganic filler having a lamellar microstructure;
- from 1% to 10%, preferably from 3% to 7% of a plasticiser compound;
- from 0% to 10%, preferably from 0% to 3% of a fatty acid;
- from 0% to 5%, preferably less than 1%, of a second bioplastic polymer, said second bioplastic polymer being polylactic acid;
- optionally at least one further compound selected from the group consisting of a chain extender compound, an additional inorganic filler, fibrous reinforcements selected from natural animal fibres, fibrous reinforcements selected from natural vegetable fibres, a bio-based flame retardant compound, an anti-UV compound, an organoleptic enhancing agent or mixtures thereof.

**13.** Article according to either claim 11 or claim 12, said article being a tidal box; alternatively said article being a fish box.

**14.** Use of the article according to any one of claims 11 to 13, for the storage or packaging of a product intended for human or animal consumption; alternately for the storage or packaging of a seafood product; alternately for the storage or packaging of a seafood product selected from the group consisting of fish, cephalopods, crustaceans, algae, and mixtures thereof; alternately for the storage or packaging of fish.

**15.** Use of the composition according to any one of claims 1 to 9 for the production of articles suitable for food contact.

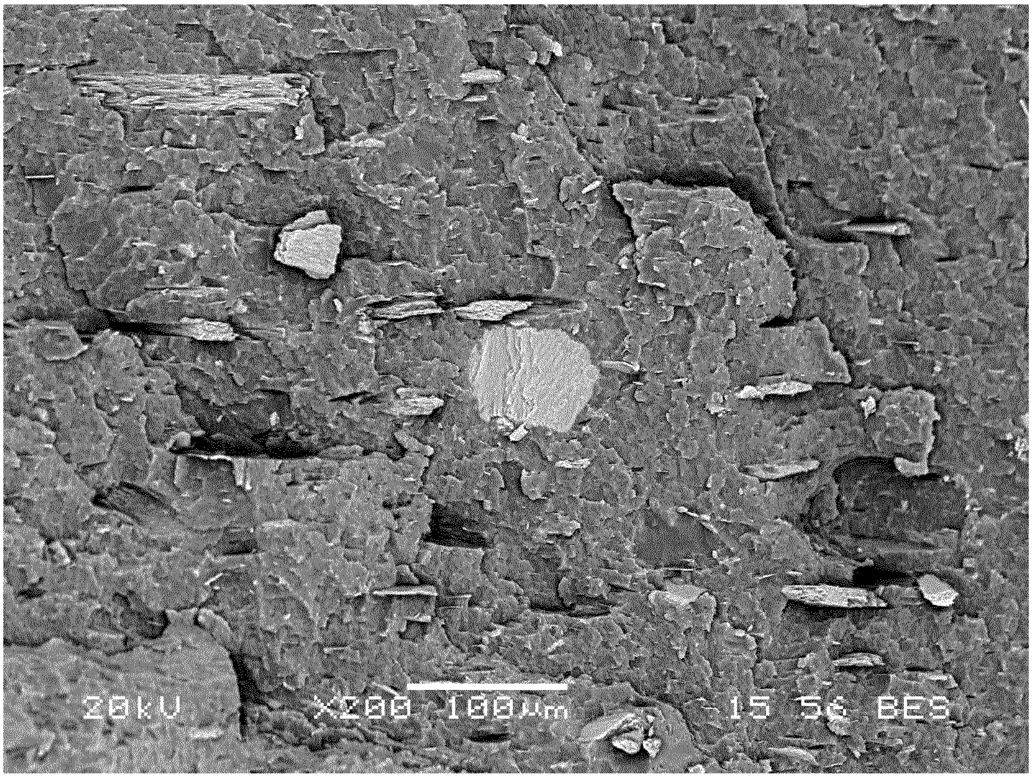


Fig. 1

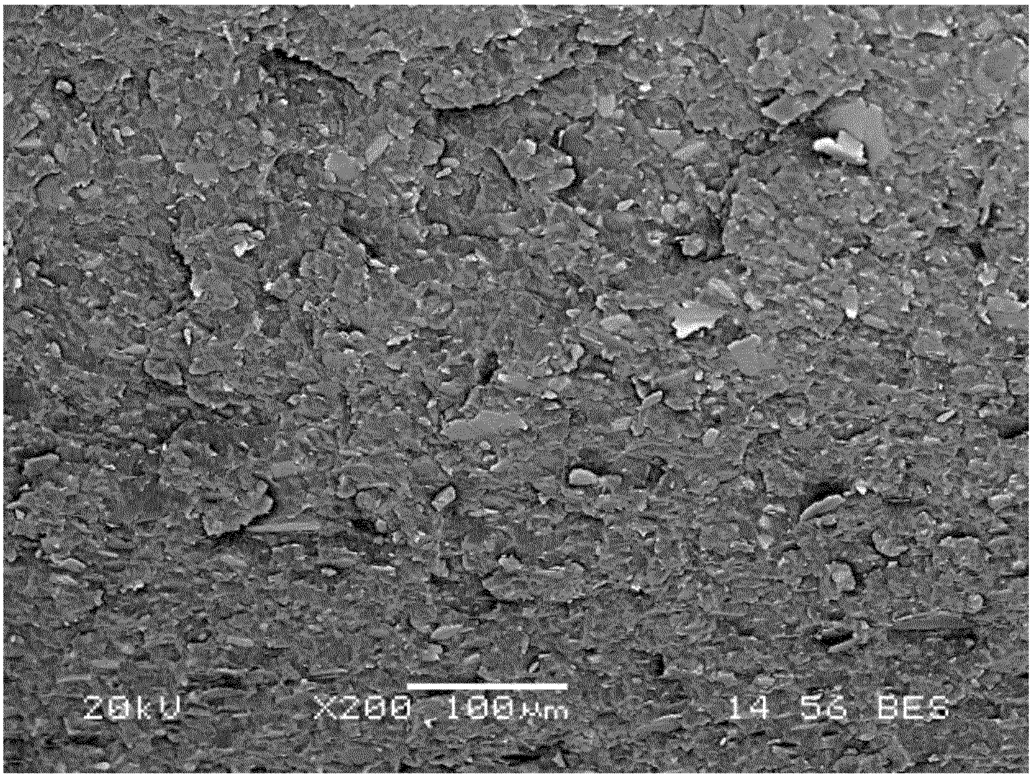


Fig. 2

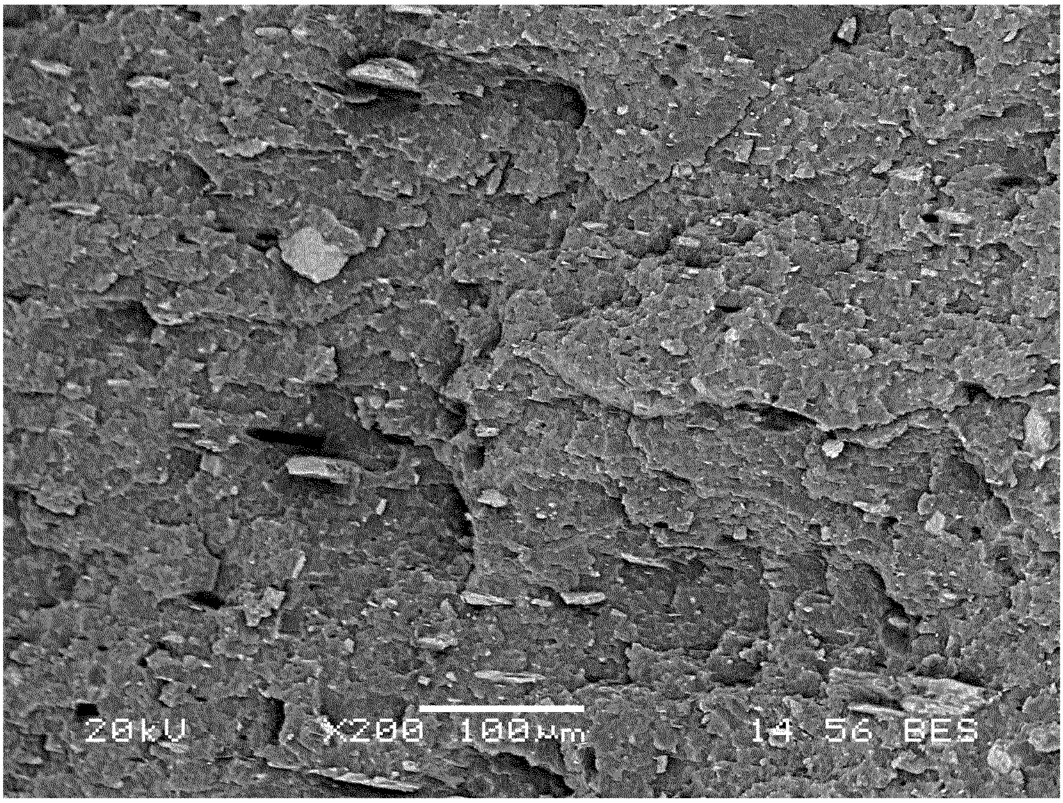


Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CN 101508829